(19) Europäisches Patentamt / European Patent Office / Office européen des brevets

(11) **EP 2 028 837 A2**

(12) **EUROPEAN PATENT APPLICATION**

(43) Date of publication:
**25.02.2009 Bulletin 2009/09**

(51) Int Cl.:
*H04N 5/202* (2006.01)

(21) Application number: **08159423.6**

(22) Date of filing: **01.07.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **21.08.2007 JP 2007214633**

(71) Applicant: **NEC Electronics Corporation
Kawasaki, Kanagawa 211-8668 (JP)**

(72) Inventors:
• **Furukawa, Takashi
  Kanagawa (JP)**
• **Higashi, Fuminori
  Kanagawa (JP)**

(74) Representative: **Betten & Resch
Patentanwälte
Theatinerstrasse 8
(Fünf Höfe)
80333 München (DE)**

(54) **Video signal processing device, video signal processing method and display device**

(57) A video signal processing device includes a sample data register to hold a signal level of a video signal after correction at each sample point as a correction level, a coefficient operation circuit to output a first coefficient, a coefficient selection circuit to output a second coefficient, and an interpolation operation unit to calculate a signal level of a video signal after correction corresponding to a signal level of the input video signal by using the correction level held in the sample data register, the first coefficient or the second coefficient and performing the cubic interpolation operation or the linear interpolation operation. The first coefficient is used when a video signal after correction is obtained from the input video signal by a linear interpolation operation. The second coefficient is used when a video signal after correction is obtained from the input video signal by a cubic interpolation operation.

Fig. 1

EP 2 028 837 A2

**Description**

BACKGROUND OF THE INVENTION

1. Field of the Invention

This invention relates to video signal processing devices and video signal processing methods performing gamma correction or inverse gamma correction on video signals, and display devices performing gamma correction depending on a display that is used when a gamma characteristic of the used display is different from a characteristic of a gamma correction which is performed on a video signal inputted. More particularly, this invention relates to display devices such as cathode-ray tube displays, liquid crystal display devices and plasma display panels, and video signal processing devices and video signal processing methods achieving good gradation or contrast of display images thereof.

2. Description of Related Art

Each display device such as a liquid crystal display or plasma or cathode-ray tube (CRT) has different gamma characteristics. However, since television broadcast signal, has a gamma characteristics corresponding to the CRT, in the case where the broadcast signal is displayed on the liquid crystal display or plasma display, it is needed to perform gamma correction corresponding to a used display device while eliminating a gamma correction which is performed on to video signals at a sending side. Therefore, in the case where video signals corresponding to several kinds of displays are output, it is needed to perform gamma correction corresponding to each display at a receiving side.

Further, contrast setting, image quality, brightness and black and white level adjustment and so on are also treated with correction similar to the gamma correction. Recently, an amount of software processing has been increasing. Therefore, in order to realize clearer and more natural image while realizing small circuit size and software processing amount, there is a growing demand of circuit design which enables to realize flatter and smoother correction curve, which requires very high technology are needed.

In a related video signal processing system, in order to deal with display devices such as the liquid crystal display, the plasma and the CRT which display video signals, gamma correction device which can respond to a plurality of display devices at a time is provided. However there are problems that the device cannot accurately approximate a gamma characteristic curve and the device needs a huge size circuit in order to accurately approximate the gamma characteristic curve. To solve these problems, there is a related art which is described in Japanese Unexamined Patent Application Publication No. 2004-140702 (Matsubara).

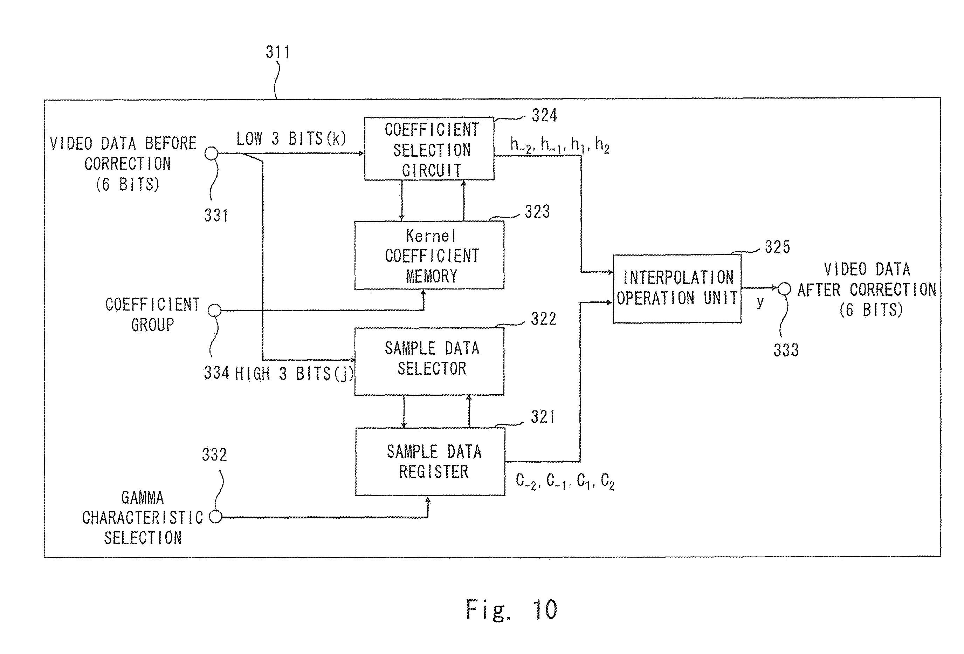

Fig. 10 is a block diagram showing a related inverse gamma correction device which is described in Matsubara. As shown Fig. 10, an inverse gamma correction device 311 includes a sample data register 321, a sample data selector 322, a Kernel coefficient memory 323, a coefficient selection circuit 324 and an interpolation operation unit 325.

The sample data register 321 sets a plurality of sample points by dividing the signal level of the inputted video signal which is from the lowest signal level to the highest signal level at even intervals and holds signal levels (correction levels) of the video signals after correction corresponding to each sample point. The interpolation operation unit 325 calculates signal levels of the video signals after correction corresponding to signal levels of the inputted video signals by performing a cubic interpolation operation using the correction levels held in the sample data register 321.

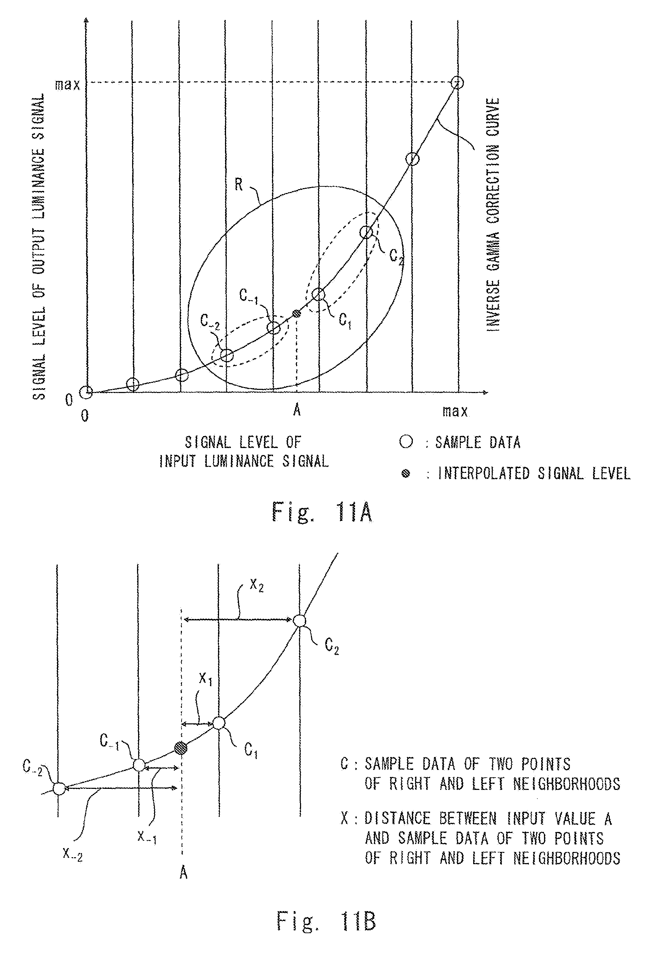

The inverse gamma correction device 311 of the related art sets a plurality of sample points at even intervals, as shown in Fig. 11. The sample data which is an output value corresponding to the sample point can be set as desired and the inverse gamma correction processing is performed according to a desired gamma curve by smoothly connecting the sample data. In this related art, to reduce circuit size and smoothly connect the sample data, a cubic interpolation operation is used.

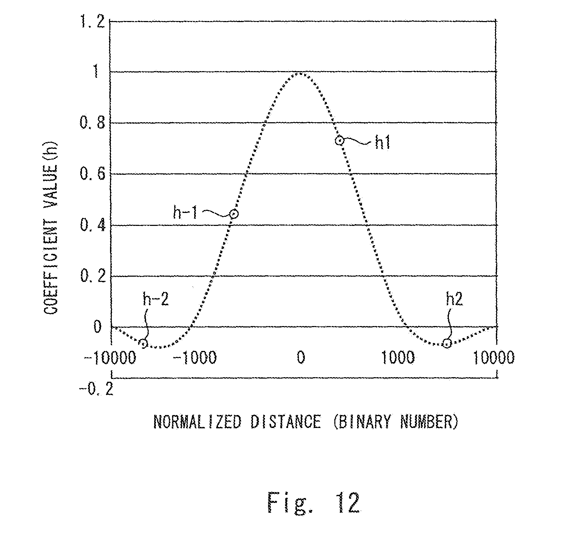

Next, the operation of the gamma correction processing of the related art will be described. Fig. 11A is an explanatory drawing showing sample data which is set in the inverse gamma correction device of the related art and Fig.11B is an enlarged view showing a region R of Fig. 11A. Fig.12 is a view showing coefficients stored in the Kernel coefficient memory 323 of the inverse gamma correction device of the related art. The inverse gamma correction device 311 divides signal level which is from the lowest signal level to the highest signal level of the video signal inputted from video data terminal 331 before correction and sets a plurality of sample points to the sample data selector 322 and the sample data register 321. The sample points indicate data which are compared with input values obtained by dividing a video signal level inputted to the sample data selector 322 at even intervals and data corrected according to the input data. As shown in Fig. 11, when the sample point is x coordinate which indicates a signal level of an input video signal, and sample data is y coordinate which indicates a signal level of an output video signal, the relation of the sample point and the sample data is the following.

$$(x,y)=(sample\ point,\ sample\ data)\quad \cdots(1)$$

The sample data which is output value corresponding to the sample point can be set as desired. The inverse gamma correction device of the related art performs an inverse gamma correction processing according to a desired gamma curve by smoothly connecting the sample data. To decrease circuit size and smoothly connect the sample data, the related art uses a cubic interpolation operation. Next, the cubic interpolation operation will be described in detail.

The cubic interpolation operation is an interpolation algorithm using Cubic polynomial and the Kernel function h(x) is described in the following expression (2). Fig. 12 is a graph showing a case where a =-0.5 in the expression (2). a is a parameter to control the character of an interpolation equation and a is usually from -0.5 to -2.

$$h(x)=\begin{cases}(a+2)|x|^{3}-(a+3)|x|^{2}+1 & 0\le|x|<1\\ a|x|^{3}-5a|x|^{2}+8a|x|-4a & 1\le|x|<2\\ 0 & 2\le|x|\end{cases}\quad\cdots(2)$$

Now the processing to calculate a signal level of an output video signal after inverse gamma correction corresponding to a signal level of an input video signal by using the cubic interpolation operation will be explained. Fig. 11 shows sample data which is set to the inverse gamma correction device 311 when the signal level of the output video signal (the point shown by • on the inverse gamma correction curve) is interpolated with the signal level A of the input video signal. A horizontal axis which is the signal level of the input video signal is divided at equal intervals and sample points are set for each divided signal level. Here, four sample points adjacent to the interpolated point A (four points $C_{-2}$, $C_{-1}$, $C_1$, $C_2$ shown by $\bigcirc$ surrounded by dotted lines in Fig. 11) are extracted as sample data. The level difference of adjacent samples of X value (hereinafter referred to as distance x) in the expression (2) corresponds to the distance "1". That is, if the level difference between the signal level of the input video signal and the level of above-cited four samples is divided by the level difference between adjacent samples, the distance x is obtained.

The distance x which is calculated here is assigned to the expression (2) and weighting factors ($h_{-2}$, $h_{-1}$, $h_1$, $h_2$ shown in Fig. 12) corresponding to the four sample data are calculated. An weighting factor is general term used for interpolation operation, for example, and is a value obtained by dividing weighted mean by total weight. As shown in expression (3), the weighting factors are multiplied by the four sample data, and summation y of result of multiplication is obtained.

$$y\ =\ h_{-2}{*}c_{-2}\ +\ h_{-1}{*}c_{-1}\ +\ h_1{*}c_1\ +\ h_2{*}c_2\quad(3)$$

The summation y obtained by the expression (3) is a video signal level of point A which is inverse gamma corrected. Four sample data to be needed in this correction processing are chosen from each four ranges of

- $2\le x<-1$, $-1\le x<0$. $0\le x<1$, $1\le x<2$, and coefficient values are Kernel coefficient (coefficient value (h)) of ($h_{-2}$, $h_{-1}$, $h_1$, $h_2$) as shown in Fig. 12 corresponding to the selected sample data.

So, in the inverse gamma correction device 311 of the related art as shown in Fig. 10, the video signal inputted from the video data input terminal 331 before correction is inputted to the coefficient selection circuit 324 and the sample data selector 322. Then by using the Kernel coefficients obtained by the coefficient selection circuit 324 and the sample data selected by the sample data selector 322, the cubic interpolation operation described in the above described expression (3) is performed in the interpolation operation unit 325. Then video data after correction is outputted from an output terminal 333.

Furthermore, in Japanese Patent No. 389994 (Ueki et al.), there is disclosed a video signal processing device having an object to determine types of video signal and to perform pixel conversion processing by switching several interpolation methods corresponding to the types of the video signals by using one interpolation circuit according to the determination result. This video signal processing device includes a video determination means for determining whether the video signal is a video signal of natural video or computer video signal generated by a computer, and an interpolation processing means for selecting predetermined interpolation processing corresponding to the determination result of the video determination means, performing processing on the video signal with the selected interpolation processing, and conversing number of pixels. The video determination means uses four pixel data of first, second, third, and fourth pixel data which are adjacent to the inputted video signal. Then the video determination means calculates a ratio of the sum of an absolute value of difference between first and second pixel data and an absolute value of difference between third and fourth pixel data to an absolute value of difference between second and third pixel data, and determines whether the inputted video signal is the natural video signal or computing video signal based on the result of comparing the calculated ratio with the predetermined threshold level.

However, in the related art described in Matsubara, sampling point is set by dividing the signal level of the input video signal from minimum level to maximum level at even intervals. Then the video signal processing device performs the cubic interpolation operation by using the sample data which is correction value corresponding to the sample point which is set. For this reason, if maximum value of input video signal is M and an interval of sampling is N, $1+(M+1)/N$ sample points and $\log_2(M+1)$ sample data are needed. That is, in the related art in Matsubara, as bit width of the sample data is large, there is a problem that the number of registers and computing units become large. Further, since there is a large number of sample points, the number of times of setting the register and software processing amount are increased.

Further, the related art in Ueki et al. includes The linear interpolation circuit and the cubic interpolation circuit and switches them. However, the art switches between the linear interpolation circuit and the cubic interpolation circuit by determining whether the input video signal is natural video or computing video. So, it cannot reduce the sample point, and there is a problem that the size of sample data register increases as described above.

SUMMARY

In one embodiment, the present invention provides a video signal processing device to perform gamma correction or inverse gamma correction on an input video signal. The video signal processing device includes a correction level holder to hold a signal level of a video signal after correction at each sample point as a correction level, a first coefficient output portion to output a first coefficient, the first coefficient being used when a video signal after correction is obtained from the input video signal by a linear interpolation, a second coefficient output portion to output a second coefficient, the second coefficient being used when a video signal after correction is obtained from the input video signal by a cubic interpolation operation, and an interpolation operation unit to calculate a signal level of a video signal after correction corresponding to a signal level of the input video signal by using the correction level held in the correction level holder, the first coefficient or the second coefficient and performing the cubic interpolation operation or the linear interpolation operation, the interpolation operation unit performing the cubic interpolation operation or the linear interpolation operation based on a level of the input video signal.

In another embodiment, the present invention provides a video signal processing method performing gamma correction or inverse gamma correction on a input video signal. The video signal processing method includes reading out sample points from a correction level holder to hold a signal level of a video signal after correction at each sample point as a correction level, outputting a first coefficient from a first coefficient output portion, the first coefficient being used when a video signal after correction is obtained from the input video signal by a linear interpolation operation, outputting a second coefficient from a second coefficient output portion, the second coefficient being used when a video signal after correction is obtained from the input video signal by a cubic interpolation operation, and performing the cubic interpolation operation or the linear interpolation operation by using the correction level held in the correction level holder, and the first coefficient or the second coefficient based on a level of the video signal.

In another embodiment, a display device showing a input video signal includes a gamma correction unit to perform gamma correction or inverse gamma correction on the input video signal. The gamma correction unit includes correction level holder to hold a signal level of a video signal after correction at each sample point as a correction level, a first coefficient output portion to output a first coefficient, the first coefficient being used when a video signal after correction is obtained from the input video signal by a linear interpolation operation, a second coefficient output portion to output a second coefficient, the second coefficient being used when a video signal after correction is obtained from the input video signal by a cubic interpolation operation, and an interpolation operation unit to calculate a signal level of a video signal after correction corresponding to a signal level of the input video signal by using the correction level held in the correction level holder, the first coefficient or the second coefficient and performing the cubic interpolation operation or the linear interpolation operation, the interpolation operation unit performing the cubic interpolation operation or the linear interpolation operation based on a level of the input video signal.

According to the invention, as the linear interpolation or the cubic interpolation is performed based on input video signal level. Accordingly there is no need to hold redundant sample data and size of circuit can be decreased by performing the linear interpolation in the video signal level period whose amount of level change is substantially linear, for example.

That is, this invention provides the video signal processing device, the video signal processing method and display device to be able to reduce the size of circuit.

BRIEF DESCRIPTION OF THE DRAWINGS

The above and other objects, advantage and features of the present invention will be more apparent from the following description of certain referred embodiments taken in conjunction with the accompanying drawings, in which:

Fig. 1 is a view showing an inverse gamma correction device according to a fist embodiment of the invention;
Fig. 2 is a view showing an inverse gamma correction curve;
Fig. 3 is a view showing a sample data selector of the inverse gamma correction device according to the first embodiment of the invention;
Fig. 4 is a flow chart showing an operation of the sample data selector of the inverse gamma correction device according to the first embodiment of the invention;
Fig. 5 is a view showing sample data which is used in an inverse gamma correction curve and a linear interpolation according to the first embodiment of the invention;
Fig. 6 is a view showing an inverse gamma correction curve according to a modified example of the first embodiment of the invention;
Fig. 7 is a view showing another inverse gamma correction curve according to a modified example of the first embodiment of the invention;
Fig. 8 is a view showing an inverse gamma correction device according to a second embodiment of the invention;
Fig. 9 is a flow chart showing an operation of the sample data selector of the inverse gamma correction device according to the second embodiment of the invention;
Fig. 10 is a block diagram showing an inverse gamma correction device according to the related art in Matsubara;
Fig. 11A is an explanatory diagram showing sample data set in the inverse gamma correction device of the related art;
Fig. 11B is an enlarged view of a region R in Fig. 11A; and
Fig. 12 is a view showing coefficients held in a Kernel coefficient memory of the inverse gamma correction device according to the related art.

DETAILED DESCRIPTION OF THE PREFERRED EMBODIMENTS

The invention will now be described herein with reference to illustrative embodiments. Those skilled in the art will recognize that many alternative embodiments can be accomplished using the teachings of the present invention and that the invention is not limited to the embodiments illustrated for explanatory purposes.

The specific embodiment to which the present invention is applied will now be described in detail with reference to the drawings. These embodiments of the present invention of a video signal processing device are applied to reduce a size of circuit and amount of software processing by performing a linear interpolation on a part of correction curve by using sample data for a cubic interpolation.

This embodiment focuses on a characteristic that an inverse gamma characteristic of an area where luminance signal exceeds white level (100 IRE) shows a curve close to a straight line. Then the video signal processing device performs linear interpolation on this area by using sample data which is used in a cubic interpolation operation. That is, it is realized to reduce amount of software processing (setting amount of register) and size of circuit by straight-line approximation.

First Embodiment

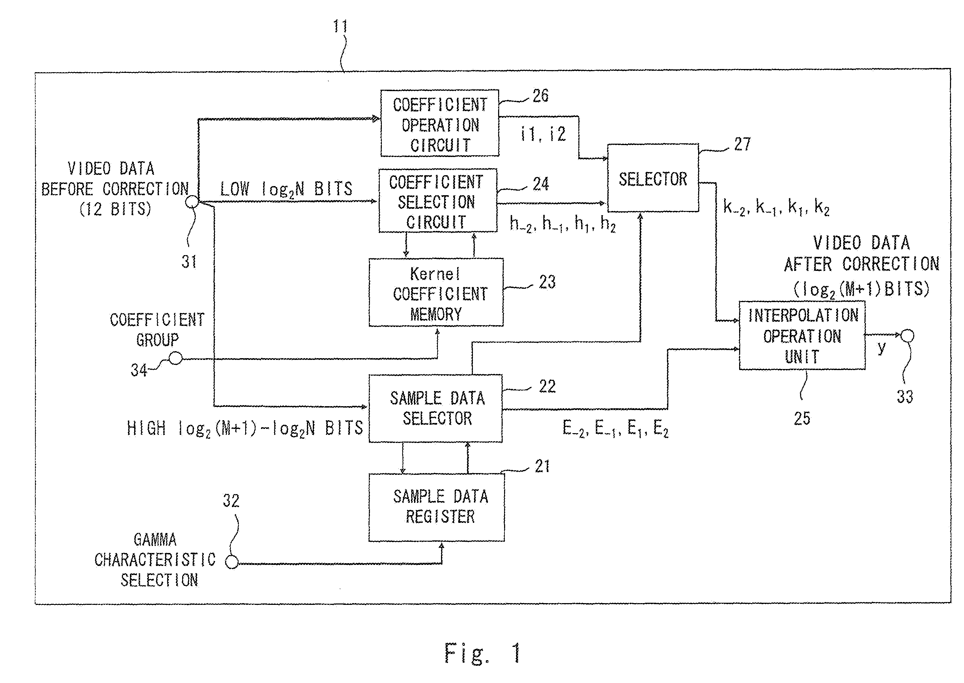

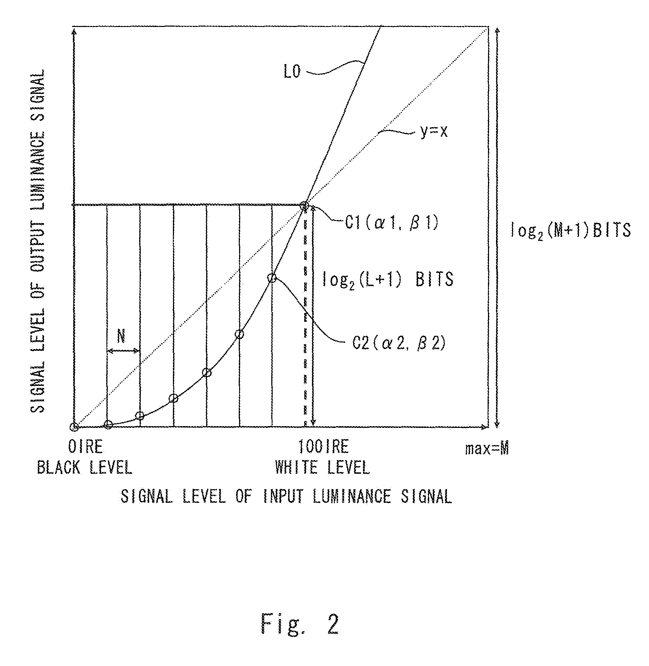

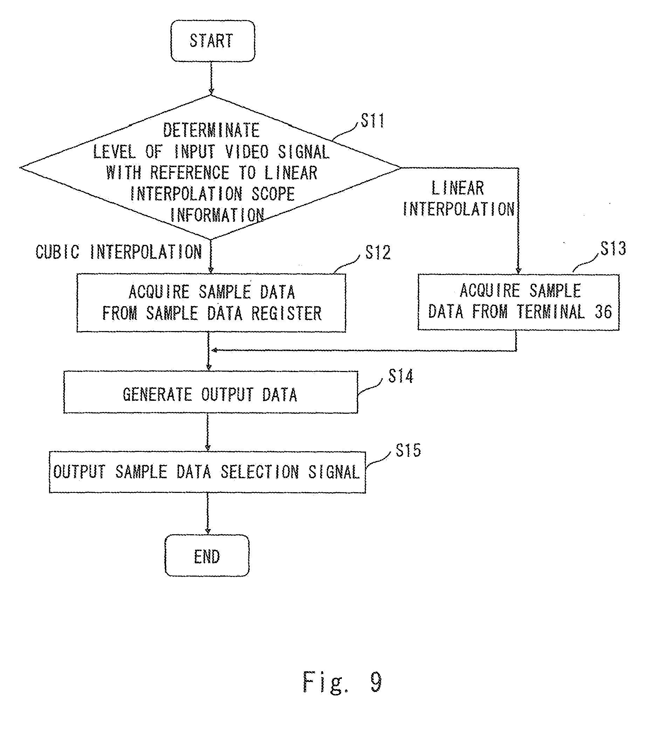

Fig. 1 shows an inverse gamma correction device according to a first embodiment of the invention. Fig. 2 shows an inverse gamma correction curve. This embodiment newly adds a coefficient operation circuit 26 and a selector 27 to the above mentioned inverse gamma correction device of Matsubara shown in Fig. 9, simplifies the sample data register 21 and optimizes the sample data selector 22. That is, an inverse gamma correction device 11 includes the sample data register 21, the sample data selector 22, the Kernel coefficient memory 23, the coefficient selection circuit 24, the interpolation operation unit 25, the coefficient operation circuit 26 and the selector 27.

The sample data register 21 serves as correction level holder to hold a signal level of a video signal after correction at each sample point as a correction level, and a sample data register write signal to write sample data value into the sample data register 21 is inputted from a gamma characteristic selection terminal 32. An external CPU or other devices and so on can write the sample data in the sample data register 21.

Here, in this embodiment, as shown in Fig. 2, sample data does not need to have amplitude of maximum input level, but only has amplitude between a black level (0IRE) and a white level (100IRE). Therefore, a bit width of the sample data of the embodiment is $\log_2(L+1)$ bits and the number of the sample points are $1+(L+1)/N$. M indicates maximum level of input video signal, and N indicates sampling interval.

The sample data selector 22 selects the sample data from the sample data register 21 and outputs the selected sample data to the interpolation operation unit 25. The inverse gamma correction device 11 according to the embodiment performs the cubic interpolation operation or the linear interpolation operation based on the input video signal level. The cubic interpolation operation needs four sample data which are in a neighborhood of the input video signal as identified above. The linear interpolation operation needs two sample points. That is, selected sample data are different depending on interpolation methods. Therefore, high $\log_2(M+1)-\log_2 N$(bits) of the image signal is inputted to the sample dada selector 22, and the sample data selector 22 determines the input video signal level and determines whether the cubic interpolation operation is performed or the linear interpolation operation is performed. In this embodiment, if the input video signal level is equal to or more than a first value th1, the linear interpolation operation is performed. If the input image signal level is less than the first value th1, the cubic interpolation operation is performed. In this embodiment, this first value th1 is a white level (100IRE). Note that, the first value the may be larger than the white level or less than the white level. Further, the linear interpolation operation can be performed also in a case of 0 to a second value th2 which is neighborhood of a black level (0<th2<th1) in addition to the level which is not only larger than the white level.

Specifically, the sample data selector 22 inputs sample data selector signal to select four or two sample data for the input video signal to the sample data register 21. In response to this, sample data signal which includes selected sample data is outputted from the sample data register 21 to the sample data selector 22. If the sample data selector 22 determines to perform the cubic interpolation operation, the sample data selector selects two sample points and another two sample points and each sample data corresponding to the selected four sample points are obtained from the sample data register 21 by the sample data signal. The two sample points are adjacent to the signal level of the input video signal and have higher level than the level of the input video signal, and the another two sample points are adjacent to the signal level of the input video signal and have lower level than the level of the input video signal. If the sample data selector 22 determines to perform the linear interpolation operation, in this embodiment, the sample data selector 22 obtains two larger sample data from all by the sample data signal.

Then, the sample data selector 22 outputs sample data ($E_{-2}$, $E_{-1}$, $E_1$, $E_2$) to the interpolation operation unit 25 , and a coefficient selection signal which selects coefficients for the cubic interpolation operation or coefficients for the linear interpolation operation is outputted to the selector 27.

The Kernel coefficient memory 23 is a memory storing coefficient group corresponding to Kernel function. The Kernel coefficient memory 23 is configured to be able to write the coefficient group from an external device. In this embodiment, coefficient memory write signal for writing the coefficient values to the memory is inputted from terminal 34 of the coefficient group. The device which writes the coefficient values to the memory is an external CPU or other devices.

The coefficient selection circuit 24 serves as a second coefficient output portion to output a second coefficient which is used when a video signal after correction is obtained from the input video signal by a cubic interpolation operation. That is, the coefficient selection signal which indicates a distance x is inputted to the Kernel coefficient memory 23, and a coefficient value signal ($h_{-2}$, $h_{-1}$, $h_1$, $h_2$) which corresponds to the distance x is outputted from the Kernel coefficient memory 23 to the coefficient selection circuit 24. The coefficient selection circuit 24 obtains the coefficients for the cubic interpolation operation by the coefficient value signal based on Kernel function whose variables are normalized by using a distance between adjacent two sample points. In this case, four coefficients are calculated by inputting the distance x from the input video signal level to each sample point selected by the coefficient selection circuit 24 into the variables in the Kernel function.

The coefficient operation circuit 26 serves as a first coefficient output portion to output a first coefficient which is used when a video signal after correction is obtained from the input video signal by a linear interpolation. The coefficient operation circuit 26 performs the linear interpolation operation by using the cubic interpolation operation circuit which is same as Matsubara. To perform the linear interpolation operation by using the cubic interpolation operation circuit, that is to integrate the cubic interpolation operation circuit and the linear interpolation operation circuit, the coefficient operation circuit 26 calculates coefficients for liner operation and outputs the result of the operation to the selector 27.

Specifically, the coefficient operation circuit 26 operates coefficients shown by the following expressions (4-1), (4-2). Note that these expressions will be proved later.

$$ i1 = (\alpha 2 - x) / (\alpha 2 - \alpha 1) \cdots (4-1) $$

$$ i2 = (x - \alpha 1) / (\alpha 2 - \alpha 1) \cdots (4-2) $$

Here, C1($\alpha$1,$\beta$1), C2($\alpha$2,$\beta$2) indicate two sample points which are used for the linear interpolation operation, x indicates a value of video signal which is inputted in the coefficient operation circuit 26, and i1, i2 indicate output coefficients of the coefficient operation circuit 26. Note that, the coefficient operation circuit 26 outputs output coefficients in a form of (0, i1, i2, 0).

The selector 27 selects output of the coefficient operation circuit 26 or output of the coefficient selection circuit 24 according to the selection signal from the sample data selector 22, and outputs coefficients ($k_{-2}$, $k_{-1}$, $k_1$, $k_2$) to the interpolation operation unit 25.

The interpolation operation unit 25 calculates expression (5) by using sample data ($E_{-2}$, $E_{-1}$, $E_1$, $E_2$) and coefficients ($k_{-2}$, $k_{-1}$, $k_1$, $k_2$).

$$y = k_{-2} * E_{-2} \ + \ k_{-1} * E_{-1} \ + \ k_1 * E_1 \ + \ k_2 * E_2 \cdots (5)$$

The interpolation operation unit 25 calculates the expression (5), but bit width of the sample data ($C_{-2}$, $C_{-1}$, $C_1$, $C_2$) are $\log_2(L+1)$ bits. That is, because in this embodiment, data which is over a white level (100IRE) performs the linear interpolation operation, it is possible to reduce the bit width of the sample data by ($\log_2(M+1)-\log_2(L+1)$)bits. This reduces circuit size of four multipliers $k_{-2} * E_{-2}$, $k_{-1} * E_{-1}$, $k_1, * E_1$, $k_2 * E_2$ and three adders by an amount equal to the reduced bit width.

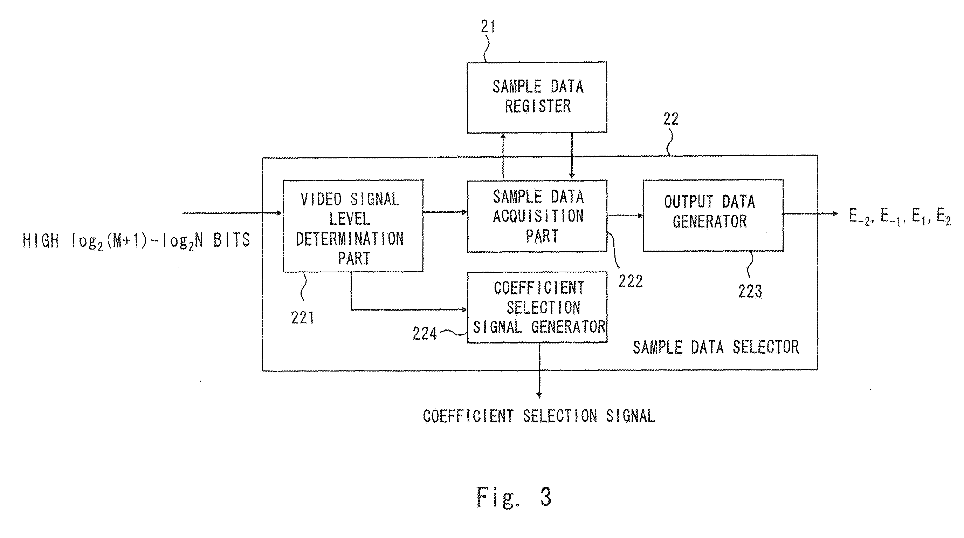

Next, the sample data selector 22 will be explained in detail. Fig.3 is a view showing the sample data selector 22. The sample data selector 22 includes a video signal level determination part 221 for determining whether the input video signal is over the white level (100IRE) or not, a sample data acquisition part 222 for obtaining the sample data from the sample data register 21 depending on the determination result, and a coefficient selection signal generator 224 for generating coefficient selection signal based on level determination result of the input video signal.

The video signal level determination part 221 receives the signal of top ($\log_2(M+1)-\log_2 N$) bits, and determines whether the input image signal is equal to or more than the white level (100 IRE) or not based on the signal. If the input signal is equal to or more than the white level (100 IRE), the linear interpolation operation is performed in the interpolation operation unit 25, and if the input signal is smaller than the white level (100 IRE), the cubic interpolation operation is performed in the interpolation operation unit 25. Since sample data that is used is different for each interpolation operation, the video signal level determination part 221 determines the level of the input image signal.

The sample data acquisition part 222 inputs sample data selection signal to select four sample data for the cubic interpolation operation or two sample data for the linear interpolation operation based on the determination result to the sample data register 21. In response to this, the sample data signals ($C_{-2}$, $C_{-1}$, $C_1$, $C_2$) or ($D_1$, $D_2$) which consist of sample data selected is outputted from the sample data register 21 to the sample data selector 22.

The output data generator 223 outputs obtained sample data as ($E_{-2}$, $E_{-1}$, $E_1$, $E_2$). In this case, the sample data ($C_{-2}$, $C_{-1}$, $C_1$, $C_2$) for the cubic interpolation operation is directly outputted. The sample data for the linear interpolation operation ($D_1$, $D_2$) is outputted as (0, $D_1$, $D_2$, 0).

The coefficient selection signal generator 224 outputs the coefficient selection signal to the selector 27. If the input video signal is smaller than the white level (100 IRE), the coefficient selection signal generator 224 makes the selector 27 select output of the coefficient selection circuit 24 by the coefficient selection signal. If the input video signal is equal to or more than the white level (100 IRE), the coefficient selection signal generator 224 makes the selector 27 select output of the coefficient operation circuit 26 by the coefficient selection signal.

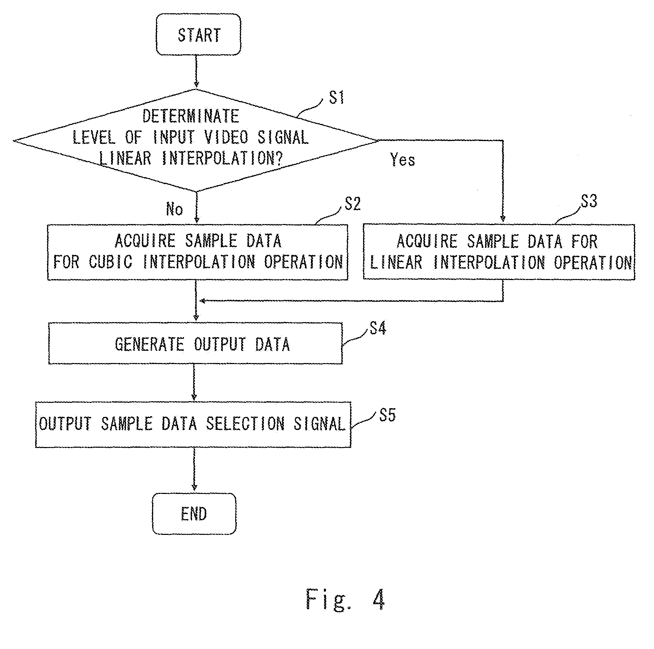

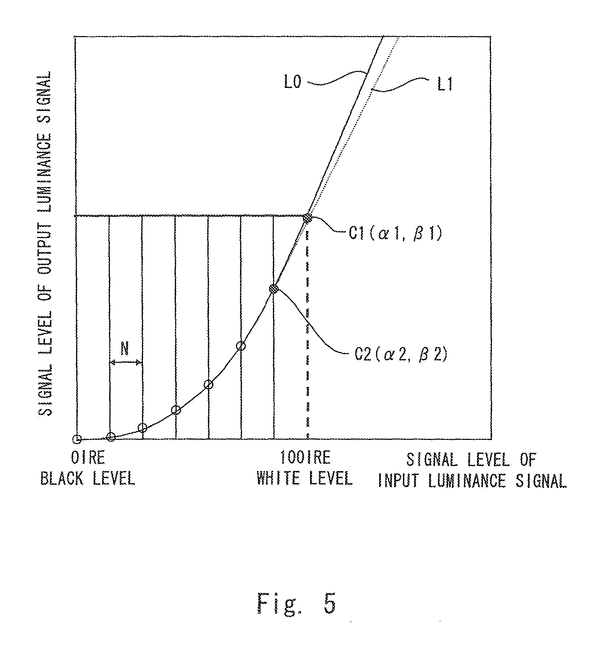

Next, operation of the sample data selector 22 will be described. Fig. 4 is a flow chart showing an operation of the sample data selector of the inverse gamma correction device according to the first embodiment of the invention. Fig. 5 is a view showing sample data which is used by in inverse gamma correction curve and a linear interpolation according to the first embodiment of the invention. As shown in Fig. 4, the sample data selector 22 receives the signal of top ($\log_2(M+1)-\log_2 N$) of 12 bits video data before correction. In response to this input signal, the video signal level determination part 221 determines whether the cubic interpolation operation should be performed or the linear interpolation operation should be performed based on the signal level of the video signal before correction. In this embodiment, in the case where the signal level is equal to or more than the white level (100 IRE), the linear interpolation operation is performed, and in the case where the signal level is smaller than the white level (100 IRE), the cubic interpolation operation is performed. Therefore the sample data selector 22 determines whether the signal level is equal to or more than the white level (100 IRE) (level determination step S1). Whether the signal level is equal to or more than the white level (100 IRE) is able to be determined only using top bits.

If the signal level of the image data before inverse gamma correction is smaller than the white level (100 IRE), the sample data acquisition part 222 obtains the sample data ($C_{-2}$, $C_{-1}$, $C_1$, $C_2$) for the cubic interpolation operation from the sample data register 21 (step S2). On the other hand, if the video signal level is equal to or more than the white level (100 IRE), the sample data acquisition part 222 obtains the sample data ($D_1$, $D_2$) for the linear interpolation operation (step S3). Here, the sample data ($D_1$, $D_2$) of this embodiment is two sample data which is the largest level of the sample points. That is, as shown in Fig. 5, two points sample data include a point which is one point smaller than the white level (100 IRE) and a point the white level (100 IRE). In this case, as shown in Fig. 5, although an error of the correction become somewhat larger, sample points for the cubic interpolation operation are utilized. Therefore it is not necessary to set the sample points for the linear interpolation operation, thereby further reducing sample points.

After the sample data acquisition part 222 obtains the sample data for the cubic interpolation operation or the sample data for the linear interpolation operation, the output data generator 223 generates sample data ($E_{-2}$, $E_{-1}$, $E_1$, $E_2$) which is outputted follows(step S3). In case of the cubic interpolation operation ($E_{-2}$, $E_{-1}$, $E_1$, $E_2$) = ($C_{-2}$, $C_{-1}$, $C_1$, $C_2$) In case of the linear interpolation operation : ($E_{-2}$, $E_{-1}$, $E_1$, $E_2$) = (O, $D_1$, $D_2$, O)
After the output data generator 223 generates output sample data, the output data generator 223 outputs the sample data ($E_{-2}$, $E_{-1}$, $E_1$, $E_2$) to the interpolation operation unit 25. The coefficient selection signal generator 224 outputs the coefficient selection signal which selects coefficients to the selector 27 (step S5).

Next, the relationship between expressions (4-1), (4-2) and expression (5) will be described. Firstly, in the case where the linear interpolation operation is realized using two sample data, expression (6) is used.

$$y=(\beta 1-\beta 2)\cdot x/(\alpha 1-\alpha 2)-(\beta 1\cdot \alpha 2-\beta 2\cdot \alpha 1)/(\alpha 1-\alpha 2)\cdots(6)$$

The expression (6) can be converted into expressions (6-1)-(6-5).

$$y=(\beta 2-\beta 1)\cdot x/(\alpha 2-\alpha 1)+(\beta 1\cdot \alpha 2-\beta 2\cdot \alpha 1)/(\alpha 2-\alpha 1)\cdots(6-1)$$

$$y=((\beta 2-\beta 1)\cdot x+(\beta 1\cdot \alpha 2-\beta 2\cdot \alpha 1))/(\alpha 2-\alpha 1)\cdots(6-2)$$

$$y=(\beta 2\cdot x-\beta 1\cdot x+\beta 1\cdot \alpha 2-\beta 2\cdot \alpha 1)/(\alpha 2-\alpha 1)\cdots(6-3)$$

$$y=((\alpha 2-x)\cdot \beta 1+(x-\alpha 1)\cdot \beta 2)/(\alpha 2-\alpha 1)\cdots(6-4)$$

$$y=((\alpha 2-x)/(\alpha 2-\alpha 1))\cdot \beta 1+((x-\alpha 1)/(\alpha 2-\alpha 1))\cdot \beta 2\cdots(6-5)$$

If the expressions (4-1), (4-2) are assigned to the expressions (6-5), expression (6-6) can be obtained. If the sample data ($E_{-2}$, $E_{-1}$, $E_1$, $E_2$) is (0, $\beta_1$, $\beta_2$, 0), and the coefficients ($k_{-2}$, $k_{-1}$, $k_1$, $k_2$) are (0, i1, i2, 0), the interpolation operation unit 25 can perform the linear interpolation operation by the expression (5).

$$y=i1\cdot \beta 1+i2\cdot \beta 2\cdots(6-6)$$

Each display device such as liquid crystal display and plasma display which shows video signal and cathode-raw tube (CRT) has individual gamma characteristic. However, because television broadcast signal has the gamma characteristic for the CRT, in the case where the signal is displayed on the liquid crystal display or the plasma display, the gamma correction or inverse gamma correction is needed. The related art described in Matsubara can perform the gamma correction and the inverse gamma correction by simple constitution which has small circuit size and amount of calculation. However, further reduction of circuit size has been demanded, and it is necessary to develop much smaller device. In addition, setting from external device such as CPU needs to be efficiently performed and it is necessary to develop a device which can further reduce amount of throughput.

As shown in Fig. 2, if luminance data which is more than 100 IRE is treated as input and output data, the inverse gamma correction result of the data which is 0-100IRE needs to have high accuracy, because the amount of change is nonlinear. However, the inverse gamma correction result of the data which is more than 100IRE needs not have high accuracy because the amount of change is substantially linear, there is no need for being accurate. Therefore sample points which are more than 100IRE are redundant, and in the related art which is described in Matsubara, software processing becomes less efficient and circuit size of the sample data register 21 becomes large.

Further, in the inverse gamma correction or gamma correction of the data which is 0-100IRE, value after correction which is an output signal never exceeds 100IRE. Accordingly, there is no need to have amplitude which is more than 100IRE does not need to have as the sample data. Therefore bit width of the data which is more than 100IRE becomes redundant, and circuit sizes of the sample data register 21 and the interpolation operation unit 25 becomes large.

On the other hand, in this embodiment, by performing the inverse gamma correction in similar accuracy as the related art by the cubic interpolation operation in the level zone from a black level (OIRE) to a white level (100IRE), and performing the inverse gamma correction by the linear interpolation operation in the level zone which is more than the white level (100IRE), both the amount of software processing and the size of circuit can be reduced. Further since the inverse gamma correction device can perform the cubic interpolation operation by the sample data selector 22, the inverse gamma correction device can perform the inverse gamma correction which is similar to the related art.

Next, the advantage of the embodiment of the invention will be described. If we focus attention on the number of the sample points: the sample points which Matsubara need : 1+(M+1)/N the sample points which this embodiment need : 1+(L+1)/N Therefore, sample points can be reduced by (M-L) /N. That is, a number of times to set the sample data which is correction value of the sample points is reduced. Thus amount of software processing of the sample data register 21 and the sample data selector 22 can be reduced.

For this reason, if the difference between the input maximum value M and the white level (100IRE) L is larger, or the distance N of sample points is smaller, reduction number of the sample points becomes larger, therefore the advantage becomes large.

There is no need for having bit width of sample data which is required by Matsubara by maximum values of $\log_2(M+1)$ in this embodiment. Thus the inverse gamma correction device only has bit width of $\log_2(L+1)$. This reduces bit width of sample data of $\log_2(M+1) - \log_2(L+1)$.
Here, total register number of bit width decreases and sample point decreases is

$$\log_2(M+1) \times (M-L)/N + \{\log_2(M+1) - \log_2(L+1)\} \times \{1+(L+1)/N\}.$$

Further the operation which is performed in the interpolation operation unit 25 is the expression (3) in Matsubara and the expression (5) in this embodiment. If the inverse gamma correction device performs the operation at the minimum time, each expression needs four computing units and three adders. Since the bit width of the coefficient ($h_{-2}$, $h_{-1}$, $h_1$, $h_2$), ($k_{-2}$, $k_{-1}$, $k_1$, $k_2$) in the expressions (3) and (5) depends on accuracy of the operation result, each bit width is same n bits. As the bit width of the sample data described in Matsubara is $\log_2(M+1)$, the interpolation operation unit needs four computing units having $n \times \log_2(M+1)$ bits, and three adders having $n+\log_2(M+1)$ bits.

On the other hand, since the bit width of the embodiment is $\log_2(L+1)$, the interpolation operation unit needs four computing units having $n \times \log_2(L+1)$ bits, and three adders having $n+\log_2(L+1)$ bits. Therefore, this embodiment can reduce the following bits of circuit.

$$n \times \{\log_2(M+1) - \log_2(L+1)\} \times 4 + \{\log_2(M+1) - \log_2(L+1)\} \times 3$$

On the contrary, the operation in the coefficient operation circuit 2 6 further needs four adders having n bit s and two dividers, as shown in expressions (4-1), (4-2). However, if we focus on the property that sample data is equally partitioned, $\alpha2-\alpha1$ is multiplier of two. Thus, $/(\alpha2-\alpha1)$ can be described by bit shift operation, and as shown in expressions (4-3), (4-4), up to two adders having (n-1) bits only needed to be added.

$$i1 = \alpha2 - x \cdots (4-3)$$

$$i2 = x - \alpha 1 \cdots (4-4)$$

If the circuit reduction in the interpolation operation unit 25 and the circuit increase in the coefficient operation circuit 26 are compared, as reduction effect of the multipliers is larger, the circuit size can be decreased as a whole.

Next, a specific example of the embodiment will be described.

In the case of M=2047, L=1023, N=128, and n=12.

About the sample data register 21 and the sample data selector 22 shown in Fig.1:

related art:

number of sample points: 17 (1+(1+2047)/128)

bit width of sample data: 11 bits (=$\log_2$ (2047+1))

specific example of the embodiment:

number of sample points: 9 (1+(1+1023)/128)

bit width of sample data: 10 bits (=$\log_2$(1023+1))

total amount of register reductions is 97=17*11-9*10

That is 48% of circuit will be decreased. This shows circuit reduction by register reduction and about 50% amount of software throughout.

About the interpolation operation unit 25 and the coefficient operation circuit 26: related art:

bit width of the sample data: 11 bits (=$\log_2$(2047+1))

That is, the following computing units are needed.

four multipliers which are 21 bits*12bits

three adders which are 23(=11+12)bits

specific example in the embodiment:

bit width of the sample data: 10 bits (=$\log_2$(1023+1))

That is, the following computing units are needed.

four multipliers which are 10 bits*12bits

three adders which are 22(=10+12)bits

two adders which are 11(=12-1)bits

Thus, in this embodiment of the invention, as shown in the expressions (4-1), (4-2), two adders of 11bits are added in the coefficient operation circuit 26. However, the effect of the circuit reduction of four multipliers and three adders due to bit width reduction of the interpolation operation unit 25 is much larger despite this increase. That is, the effect of circuit reduction of the inverse gamma correction device 11 as a whole can be made larger by the effect of register reduction and operational circuit reduction.

In this embodiment, circuit size reduction can be realized by reduction of amount of software processing due to displacement of the linear interpolation operation, reduction of bit width of sample data, and integration of computing unit of the linear interpolation operation and the cubic interpolation operation (the interpolation operation unit 25).

Next, a variation of the embodiment will be described.

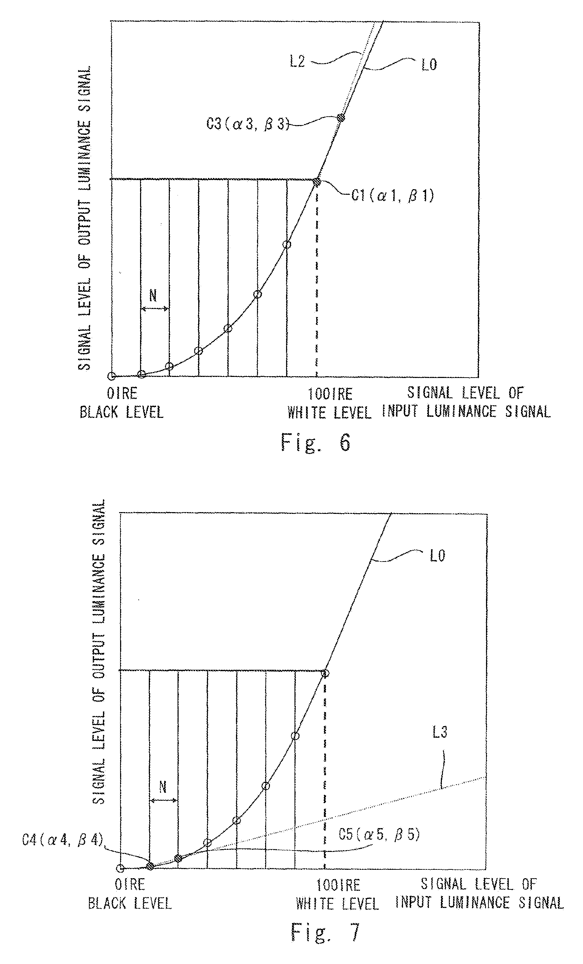

Fig. 6 is a view showing an inverse gamma correction curve of the variation of the embodiment. In the above embodiment, we explained that large two points out of the sample points are used for the linear interpolation operation, but it is not limited to the above embodiments. In the variation, as shown in Fig.6, sample point C3 whose level is further larger than the white level (100IRE) is set, and if the linear interpolation operation, is performed, the sample points C3 and C1 are used. This can increase accuracy of the interpolation than that of the above embodiment.

In this case, the sample data selector 22 and the sample data register 21 need bit width up to $\log_2$(M+1) bits instead of $\log_2$(L+1) bits. So, the sample data C3 can be stored in the interpolation operation unit 25. In this case, the sample data selector 22 and the sample data register 21 need bit width of $\log_2$(L+1). If $\alpha 3 - \alpha 1$ is multiplier of two, coefficient computing circuit size of the coefficient operation circuit 26 can be made minimum.

Next, another variation of the embodiment will be described. In the above embodiment, we explained that if the input image signal is equal to or more than the white level (100IRE), the linear interpolation operation is performed. However the level zone in which the linear interpolation operation is performed is not limited to this. For example, as shown in Fig.7, in the black level neighborhood, as the amount of change is almost line shape, the linear interpolation operation can be performed in this zone. For example, the linear interpolation operation can be performed in a level zone from 0 to th2 (0<th2<th1), and the cubic interpolation operation can be performed in a level zone which is more than th2, or the linear interpolation operation can be performed in the level zone from 0 to th2 and a level zone which is equal to or more than th1 and the cubic interpolation operation can be performed in a level zone from th2 to th1. In this case, sample data C4 ($\alpha$4,$\beta$4), C5($\alpha$5,$\beta$5) for the cubic interpolation operation which are included in the level zone from 0 to th2 are used as sample data for the linear interpolation operation. The level of the input image signal is interpolated in points on line L3 by sample data C4 ($\alpha$4,$\beta$4), C5($\alpha$5,$\beta$5). This can further decrease the number of sample data.

Second Embodiment

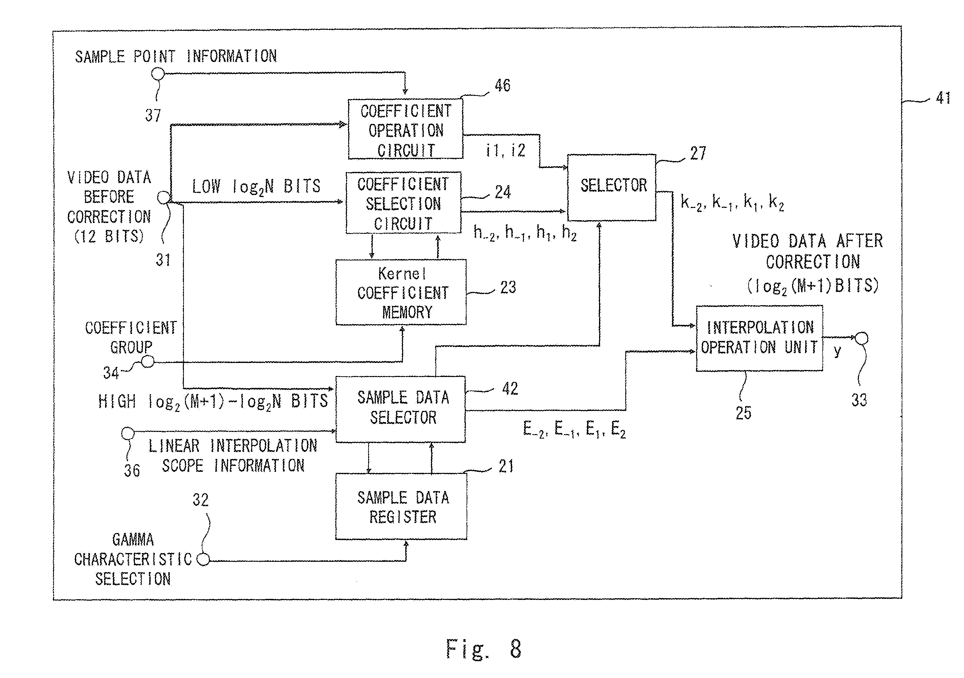

Fig.8 is a view showing an inverse gamma correction device of a second embodiment of the invention. An inverse gamma correction device 41 of the second embodiment includes a sample point information terminal 37 and a linear interpolation scope information terminal 36 that are added to the inverse gamma correction device 11 of the first embodiment, and sample point information is inputted to the coefficient operation circuit 46 and linear interpolation range information is inputted to the sample data selector 42.

$\alpha$1, $\alpha$2 of the expressions (4-1), (4-2) which are performed in the coefficient operation circuit 46 are inputted to the coefficient operation circuit 46 from external through the sample point information terminal 37. The range of image signal level in which the linear interpolation operation should be performed and sample data which is used in the linear interpolation operation is inputted to the sample data selector 42 from the linear interpolation range information terminal 36.

Fig.9 is a flow chart showing an operation of the sample data selector 42 of the embodiment. As shown in Fig. 9, the sample data selector 42 determines whether the input video signal is within linear interpolation range which is shown by the linear interpolation range information (step S11). If the input video signal is within the linear interpolation range, sample data is obtained from the linear interpolation range information terminal 36 (step S13). On the other hand, if the input video signal is not within the linear interpolation range, sample data for the cubic interpolation operation is obtained from the sample data register 21 as well as the first embodiment. Rest of steps are same as in the first embodiment (step S12). Thus, output data is formed in predetermined format (step S14), and it is outputted to the interpolation operation unit 25 and at the same time, coefficient selection signal is outputted to the selector 27.

In this embodiment, in addition to the effect of the first embodiment, it is possible to perform the linear interpolation operation in all ranges without limiting the range to more than the white level (100IRE).

In the first embodiment of the invention, largest two points of the sample data out of the sample points are used for the linear interpolation operation. Therefore, the range of the linear interpolation operation is limited to the level which is more than the white level (100IRE). On the other hand, in the second embodiment, by inputting the information of two points of sample points, sample data and information of the level in which the linear interpolation operation is performed from external, the inverse gamma correction can be performed without limiting to the range of the linear interpolation operation.

Further, because the sample points for the cubic interpolation operation are not needed, sample points in the range of the linear interpolation operation are decreased and amount of throughout of software can be reduced. Furthermore, since the selector 27 is provided, the inverse gamma correction by the cubic interpolation operation as the related art can be performed.

This embodiment performs the gamma correction or the inverse gamma correction by the cubic interpolation operation as in the first embodiment. Further the embodiment has the function which switches the linear interpolation operation and the cubic interpolation operation based on the level of the input video signal. Then circuit size is reduced by switching the linear interpolation operation and the cubic interpolation operation by selecting the coefficients and by commonly using computing unit of the interpolation operation. Further, the linear interpolation operation can be performed in any range by inputting the information of the linear interpolation operation from external. Furthermore, by performing the linear interpolation operation by using the sample points for the cubic interpolation operation, the retaining amount of sample points can be reduced.

It is apparent that the present invention is not limited to the above embodiments, but may be modified and changed without departing from the scope and spirit of the invention. For example, the above embodiments were described as a hardware configuration, but the present invention is not limited to this, but any processing may be implemented by a CPU (Central Processing Unit) executing a computer program. In this case, the computer program can be provided with being recorded in a recording media, or can be provided with being transmitted via the Internet or other transmission media.

According to one embodiment there is provided a video signal processing device includes a sample data register to hold a signal level of a video signal after correction at each sample point as a correction level, a coefficient operation circuit to output a first coefficient, a coefficient selection circuit to output a second coefficient, and an interpolation operation unit to calculate a signal level of a video signal after correction corresponding to a signal level of the input video signal by using the correction level held in the sample data register, the first coefficient or the second coefficient and performing the cubic interpolation operation or the linear interpolation operation. The first coefficient is used when a video signal after correction is obtained from the input video signal by a linear interpolation operation. The second coefficient is used when a video signal after correction is obtained from the input video signal by a cubic interpolation operation.

**Claims**

1. A video signal processing device to perform gamma correction or inverse gamma correction on an input video signal, comprising:

a correction level holder to hold a signal level of a video signal after correction at each sample point as a correction level;
a first coefficient output portion to output a first coefficient, the first coefficient being used when a video signal after correction is obtained from the input video signal by a linear interpolation;
a second coefficient output portion to output a second coefficient, the second coefficient being used when a video signal after correction is obtained from the input video signal by a cubic interpolation operation; and
an interpolation operation unit to calculate a signal
level of a video signal after correction corresponding to a signal level of the input video signal by using the correction level held in the correction level holder, the first coefficient or the second coefficient and performing the cubic interpolation operation or the linear
interpolation operation, the interpolation operation unit performing the cubic interpolation operation or the linear interpolation operation based on a level of the input video signal.

2. The video signal processing device according to claim 1, wherein the interpolation operation unit performs the linear interpolation operation when the level of the input video signal is equal to or more than a first value th1.

3. The video signal processing device according to claim 1 or 2, wherein the interpolation operation unit performs the cubic interpolation operation when the level of the input video signal is less than a first value th1.

4. The video signal processing device according to one of claims 1 to 3, wherein the interpolation operation unit performs the linear interpolation operation when the level of the input video signal is between zero and a second value th2 (0<th2<th1), and performs the cubic interpolation operation when the level of the input video signal is equal to or more than the second value th2.

5. The video signal processing device according to one of claims 1 to 4, wherein the interpolation operation unit performs the linear interpolation operation when the level of the input video signal is between zero and a second value th2 and more than a first value th1 (0<th2<th1), and performs the cubic interpolation operation when the level of the input video signal is between the second value th2 and the first value th1.

6. The video signal processing device according to one of claims 2 to 5, wherein the first value th1 is a white level

7. The video signal processing device according to one of claims 1 to 6, wherein the interpolation operation unit performs the cubic interpolation operation and the linear interpolation operation using common sample points, the common sample points can be commonly used in the cubic interpolation operation or the linear interpolation operation.

8. The video signal processing device according to one of claims 2 to 7, wherein the interpolation operation unit performs the linear interpolation operation using two sample points including a sample point corresponding to the first value.

9. The video signal processing device according to one of claims 1 to 8, wherein the interpolation operation unit performs the linear interpolation operation using a sample point corresponding to the first value and an adjacent sample point.

10. The video signal processing device according to one of claims 1 to 9, wherein the interpolation operation unit performs the cubic interpolation operation and the linear interpolation operation by using a same calculation unit.

11. The video signal processing device according to one of claims 1 to 10, further comprising a sample data selector to select two sample points and another two sample points and to obtain correction levels ($E_{-2}$, $E_{-1}$, $E_1$, $E_2$) corre-

sponding to four sample points from the correction level holder, the two sample points being adjacent to the signal level of the input video signal and have higher level than the level of the input video signal, and the another two sample points being adjacent to the signal level of the input video signal and have lower level than the level of the input video signal, wherein the second coefficient output portion takes out four coefficients ($k_{-2}$, $k_{-1}$, $k_1$, $k_2$) to perform the cubic interpolation operation based on Kernel function whose variables are normalized by using a distance between adjacent sampling points, the four coefficients being calculated by inputting a distance to the variables in the Kernel function, the distance being from the signal level of the input video signal to each sample point selected by the sample data selector,

the interpolation operation unit performs the cubic interpolation operation by using $y=k_{-2}*E_{-2}+k_{-1}*E_{-1}+k_1*E_1+k_2*E_2$ based on four correction levels taken out by the sample data selector and four coefficients taken out by the second coefficient output portion.

**12.** The video signal processing device according to claim 11, further comprising a coefficient memory storing coefficient group corresponding to the Kernel function, wherein the second coefficient output portion reads out coefficients corresponding to the distance from the coefficient group stored in the coefficient memory.

**13.** The video signal processing device according to claim 12, wherein the coefficient group can be written in the coefficient memory from an external device.

**14.** The video signal processing device according to one of claims 11 to 13, wherein the first coefficient output portion outputs i1, i2 as first coefficients, i1 and 22 being calculated by

$$i1 = (\alpha2 - x) / (\alpha2 - \alpha1)$$

$$i2 = (x - \alpha1) / (\alpha2 - \alpha1)$$

where two sample points used in the linear interpolation operation are ($\alpha1$, $\beta i$) ($\alpha2$, $\beta2$), and a value of the input video signal is x.

**15.** The video signal processing device according to one of claims 11 to 14, wherein the sample data selector outputs ($E_{-2}$, $E_{-1}$, $E_1$, $E_2$) = (0, $\beta1$, $\beta2$,0) to the interpolation operation unit,

the first coefficient output portion outputs ($k_{-2}$, $k_{-1}$, $k_1$, $k_2$)=(0, i1, 12, 0) to the interpolation operation unit, and the interpolation operation unit performs the linear interpolation operation by using $y=k_{-2}*E_{-2}+k_{-1}*E_{-1}+k_1*E_1+k_2*E_2$.

**16.** A video signal processing method performing gamma correction or inverse gamma correction on an input video signal, the method comprising:

reading out sample points from a correction level holder to hold a signal level of a video signal after correction at each sample point as a correction level;

outputting a first coefficient from a first coefficient output portion, the first coefficient being used when a video signal after correction is obtained from the input video signal by a linear interpolation operation;

outputting a second coefficient from a second coefficient output portion, the second coefficients being used when a video signal after correction is obtained from the input video signal by a cubic interpolation operation; and performing the cubic interpolation operation or the linear interpolation operation by using the correction level held in the correction level holder, and the first coefficient or the second coefficient based on a level of the video signal.

**17.** The video signal processing method according to claim 16, further comprising one or more of the additional features as defined in one of claims 2 to 15.

**18.** A display device showing an input video signal comprising:

a gamma correction unit to perform gamma correction or inverse gamma correction on the input video signal, wherein

the gamma correction unit comprises:

a correction level holder to hold a signal level of a video signal after correction at each sample point as a correction level;

a first coefficient output portion to output a first coefficient, the first coefficient being used when a video signal after correction is obtained from the input video signal by a linear interpolation operation;

a second coefficient output portion to output a second coefficient, the second coefficient being used when a viedo signal after correction is obtained form the input video signal by a cubic interpolation operation; and

an interpolation operation unit to calculate a signal level of a video signal after correction corresponding to a signal level of the input video signal by using the correction level held in the correction level holder, the first coefficient or the second coefficient and performing the cubic interpolation operation or the linear interpolation operation, the interpolation operation unit performing the cubic interpolation operation or the linear interpolation operation based on a level of the input video signal.

Fig. 1

Fig. 2

EP 2 028 837 A2

21

SAMPLE DATA
REGISTER

22

HIGH $\log_2(M+1) - \log_2 N$ BITS

VIDEO SIGNAL
LEVEL
DETERMINATION
PART

221

SAMPLE DATA
ACQUISITION
PART

222

OUTPUT DATA
GENERATOR

$E_{-2}, E_{-1}, E_1, E_2$

223

COEFFICIENT
SELECTION
SIGNAL GENERATOR

224

SAMPLE DATA SELECTOR

COEFFICIENT SELECTION SIGNAL

Fig. 3

START

DETERMINATE
LEVEL OF INPUT VIDEO SIGNAL
LINEAR INTERPOLATION? — S1

No

Yes

ACQUIRE SAMPLE DATA
FOR CUBIC INTERPOLATION OPERATION — S2

ACQUIRE SAMPLE DATA FOR
LINEAR INTERPOLATION OPERATION — S3

GENERATE OUTPUT DATA — S4

OUTPUT SAMPLE DATA SELECTION SIGNAL — S5

END

Fig. 4

Fig. 5

Fig. 6

Fig. 7

Fig. 8

EP 2 028 837 A2

```
                    ┌─────────┐
                    │  START  │
                    └─────────┘
                         │
                         ▼
              DETERMINATE                        S11
       LEVEL OF INPUT VIDEO SIGNAL
        WITH REFERENCE TO LINEAR
         INTERPOLATION SCOPE
              INFORMATION
                                         LINEAR
                                      INTERPOLATION

CUBIC INTERPOLATION          S12                              S13
┌──────────────────────────┐        ┌──────────────────────────┐
│   ACQUIRE SAMPLE DATA     │        │     ACQUIRE SAMPLE       │
│ FROM SAMPLE DATA REGISTER │        │  DATA FROM TERMINAL 36   │
└──────────────────────────┘        └──────────────────────────┘
                         │
                         ▼                          S14
            ┌──────────────────────────┐
            │   GENERATE OUTPUT DATA    │
            └──────────────────────────┘
                         │
                         ▼                          S15
            ┌────────────────────────────────┐
            │ OUTPUT SAMPLE DATA SELECTION SIGNAL │
            └────────────────────────────────┘
                         │
                         ▼
                    ┌─────────┐
                    │   END   │
                    └─────────┘
```

Fig. 9

Fig. 10

EP 2 028 837 A2

Fig. 11A

Fig. 11B

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004140702 A, Matsubara

- JP 389994 A, Ueki